# EUROPÄISCHE PATENTSCHRIFT

(11) **EP 0 881 032 B1**
(45) Veröffentlichungstag und Bekanntmachung des Hinweises auf die Patenterteilung: **30.07.2003**
(21) Anmeldenummer: 98107114.5
(22) Anmeldetag: 18.04.1998
(51) Int. Cl.: B23Q 11/00, B23Q 11/10, B23Q 3/157, B23B 31/26

(54) **Werkzeugmaschine mit Kühlmittel-Spülung**
Machine tool with coolant flushing
Machine-outil avec rinçage par l'agent de refroidissement

(30) Priorität: 27.05.1997 DE 19722003; 25.06.1997 DE 19726942
(43) Veröffentlichungstag der Anmeldung: 02.12.1998
(60) Teilanmeldung: 03011591.9
(73) Patentinhaber: CHIRON-WERKE GMBH & CO. KG, 78532 Tuttlingen (DE)
(72) Erfinder: Winkler, Hans Henning, Dr.-Ing., 78532 Tuttlingen (DE); Schweizer, Anton, 78573 Wurmlingen (DE)
(74) Vertreter: Otten, Hajo, Dr.-Ing.

(56) Entgegenhaltungen:
- EP-A- 0 458 014
- EP-A- 0 706 851
- DE-A- 2 632 228
- DE-A- 3 012 049
- DE-U- 8 430 433
- PATENT ABSTRACTS OF JAPAN vol. 1996, no. 04, 30. April 1996 (1996-04-30) -& JP 07 314279 A (HAMAI SANGYO KK), 5. Dezember 1995 (1995-12-05)
- PATENT ABSTRACTS OF JAPAN vol. 018, no. 474 (M-1668), 5. September 1994 (1994-09-05) & JP 06 155224 A (KITAMURA MACH CO LTD), 3. Juni 1994 (1994-06-03)

## Beschreibung

Die vorliegende Erfindung betrifft eine Werkzeugmaschine mit einer Spindel, die eine Werkzeugaufnahme für Werkzeughalter aufweist, einer Werkzeugwechselvorrichtung zum Überführen der Werkzeughalter zwischen deren jeweiliger Magazinposition und einer Arbeitsposition in der Werkzeugaufnahme, und einer Innenkühlung, die durch einen längs durch die Spindel verlaufenden Innenkanal einem in die Werkzeugaufnahme eingespannten Werkzeughalter Kühlmittel von einer Kühlmittelversorgung zuführt, um ein im Einsatz befindliches Werkzeug zu durchspülen, wobei eine Spülvorrichtung vorgesehen ist, um den Werkzeughalter während seines Einwechselns in die Werkzeugaufnahme zu spülen.

Die Erfindung betrifft ferner ein Verfahren zum Betreiben einer derartigen Werkzeugmaschine, das insbesondere den Werkzeugwechsel betrifft.

Eine Werkzeugmaschine der vorstehend genannten Art ist aus der EP 0 706 851 A1 bekannt.

Eine ferner aus DE 84 30 433 U bekannte Werkzeugmaschine weist eine in einem Spindelgehäuse drehbar gelagerte Spindel auf, an deren Stirnseite zentrisch eine Aufnahme für Werkzeughalter vorgesehen ist.

Derartige Werkzeughalter sind in der Regel genormt, sie weisen einen Steilkegel auf, der komplementär zu der Werkzeugaufnahme in der Spindel ausgebildet ist. An den Steilkegel schließt sich nach unten ein verdickter Bund an, an dem eine Greifernut vorgesehen ist. Unterhalb des Bundes verläuft ein Halteschaft, in dem Werkzeuge befestigt werden können.

Beim Einspannen des Werkzeughalters in die Spindel gelangt der Steilkegel in Anlage mit einer konischen Innenfläche der Werkzeugaufnahme, wobei für das Einspannen des Werkzeughalters eine Spannvorrichtung vorgesehen ist, die auf an sich bekannte Weise arbeitet.

Die bekannte Werkzeugmaschine umfaßt eine Innenkühlung mit einem längs durch die Spindel verlaufenden Innenkanal, der im Bereich der Spannvorrichtung über einen Drehverteiler in Zuführleitungen mündet, die durch die Spindel zu deren Stirnseite laufen und dort mit Kanälen in Eingriff gelangen, die oben auf dem verdickten Bund des Werkzeughalters münden. Diese Kanäle führen durch den Werkzeughalter in das von ihm getragene Werkzeug, um dieses im Betrieb zu kühlen und zu durchspülen. Die Innenkühlung kann auf Druckluft umgeschaltet werden, um das bearbeitete Werkstück abzublasen.

Ferner ist eine Spülvorrichtung vorgesehen, die außermittige Kanäle in einer Spannstange der Spannvorrichtung umfaßt, wobei diese Kanäle über Ringkanäle mit einer zentral in die Werkzeugaufnahme mündenden Bohrung in Verbindung stehen. Die Spülvorrichtung leitet durch dieses System ein Säuberungsmittel, durch das die Werkzeugaufnahme beim Werkzeugwechsel gereinigt werden kann. In Abhängigkeit von der axialen Lage der Spannstange wird eine Zufuhr des Säuberungsmittels möglich, wobei im ausgekuppelten Zustand eine Querbohrung in der Spannstange fluchtend mit einer Versorgungsbohrung im Gehäuse ist, die wiederum mit einer Säuberungsmittelsquelle in Verbindung steht.

Durch konstruktiv aufwendige Maßnahmen wird sichergestellt, daß kein Kühlmittel in die Werkzeugaufnahme hinein gelangt.

Für das Reinigen von Werkzeughaltern mit Steilkegel ist aus der DE 40 12 314 A1 eine Reinigungseinrichtung bekannt, die statt eines Werkzeughalters in die Werkzeugaufnahme der Spindel eingesetzt wird und selbst einen vergleichbaren Aufnahmeraum für Steilkegel aufweist. In diesem Aufnahmeraum sind Bürsten vorgesehen, die einen eingeführten Werkzeughalter-Steilkegel reinigen, wozu als Säuberungsmittel auch Kühlmittel verwendet werden kann, das auf übliche Weise über den Steilkegel zugeführt wird.

Statt der eingangs erwähnten Steilkegel können für die Werkzeughalter auch Kegel-Hohlschäfte vorgesehen sein, die mit einer oberen Öffnung versehen sind, durch die die Zangensegmente und die Spannstange eines Spannsystems in das Innere des Kegel-Hohlschaftes eingreifen, um diesen in die Werkzeugaufnahme einzuziehen. Die Plananlage zwischen Spindel und Werkzeughalter erfolgt hier nicht vorrangig über die konische Außenfläche des Kegel-Hohlschaftes, sondern über eine nach oben weisende Ringfläche des verdickten Bundes, die mit einer Anlagefläche an der Stirnseite der Spindel in Plananlage kommt, wenn der Werkzeughalter in die Werkzeugaufnahme eingezogen wird.

In der Spannstange verläuft zentrisch ein Innenkanal, der mit einer Innenkühlung der Werkzeugmaschine verbunden ist. An ihrem unteren Ende weist die Spannzange einen verdickten Spannzapfen auf, in dem eine nach unten offene Bohrung vorgesehen ist, in die der Innenkanal mündet. Zugeordnet befindet sich innen in einem Kegel-Hohlschaft ein Kühlmittelröhrchen, das in die Bohrung des Spannzapfens eingreift, wenn dieser beim Einspannen eines Werkzeughalters in den Kegel-Hohlschaft hineingelangt. Das Kühlmittelröhrchen ist mit einer Innenbohrung versehen, die zu dem eingespannten Werkzeug führt.

Wenn der Werkzeughalter mit dem Kegel-Hohlschaft in die Werkzeugaufnahme eingespannt ist, kann folglich Kühlmittel durch den Innenkanal in der Spannzange sowie die Innenbohrung in dem Kühlmittelröhrchen zu dem Werkzeug gelangen, um dieses von innen zu kühlen und gleichzeitig Späne abzuspülen.

Es hat sich nun herausgestellt, daß offenbar wegen unzureichender Außenspülung dennoch Späne an dem Steilkegel bzw. Kegel-Hohlschaft hängenbleiben, die in der Magazinstellung des jeweiligen Werkzeughalters an der äußeren Konusfläche und/oder an der Ringfläche des verdickten Bundes antrocknen. Bei dem nächsten Einspannen eines derart verschmutzten Werkzeughalters in die Werkzeugaufnahme der Spindel kommt es dann insbesondere bei Werkzeughaltern mit Kegel-Hohlschaft zu Fehlern bei der Plananlage, so daß das Werkzeug nicht zentrisch und fluchtend zu der Spindelachse eingespannt wird.

Aus diesen Gründen ist es erforderlich, insbesondere bei Werkzeughaltern mit Kegel-Hohlschaft relativ häufig Wartungsarbeiten durchzuführen, um Bearbeitungsfehler durch infolge der Verschmutzung mit Spänen nicht korrekt eingespannte Werkzeughalter zu vermeiden. Ferner müssen relativ häufig Werkzeughalter und Spindeln ausgetauscht werden, weil die an dem Werkzeughalter verbleibenden Späne sich in die Anlageflächen eindrücken, was auf Dauer ein lagegenaues Einspannen von Werkzeughaltern auch dann verhindert, wenn die Anlageflächen später wieder spänefrei sind.

Derartige Probleme sind aus dem Stand der Technik bereits seit längerem bekannt. So gibt es Werkzeugmaschinen, bei denen durch eine Bohrung in der Längsachse der Spindel Luft zugeführt wird, um die Werkzeugaufnahme vor dem Einkuppeln eines neuen Steilkegels auszublasen. Aus der DE 33 20 873 A1 ist in diesem Zusammenhang eine Ausblasanordnung bekannt, bei der die Werkzeugaufnahme der Spindel in jeder beliebigen Drehstellung der Spindel ausgeblasen werden kann. Hierzu ist an der Spindel eine äußere Ringnut vorgesehen, von der Kanäle quer durch die Spindel in die Werkzeugaufnahme hinein verlaufen. In dem Spindelgehäuse ist eine zugeordnete Ringnut vorgesehen, die von außen mit Druckluft versorgt wird. Über die beiden Ringnuten und die Querbohrung gelangt so von außen Druckluft in den oberen Bereich der Werkzeugaufnahme oberhalb der Innenkegelfläche.

Eine vergleichbare Konstruktion ist aus der EP 0 417 549 B1 bekannt, wo der Kanal jedoch in dem oberen Drittel der Innenkegelfläche mündet.

Die DE 26 32 228 A1 offenbart ebenfalls eine vergleichbare Konstruktion, dort münden jedoch gleich mehrere Kanäle über den Umfang verteilt in der Kegelfläche, und zwar an ihrem unteren Ende. Die Kanäle verlaufen schräg nach unten und innen zur Spindelachse, wobei durch diese schräge Anordnung nicht nur die Werkzeugaufnahme ausgeblasen, sondern auch der Steilkegel abgeblasen werden soll. Die Neigung der Kanäle ist dabei so gewählt, daß der Steilkegel weit vor Erreichen der Öffnung der Werkzeugaufnahme abgeblasen wird, so daß die abgeblasenen Späne nicht in die Werkzeugaufnahme gelangen können.

Bei allen drei insoweit beschriebenen Werkzeugmaschinen wird Druckluft seitlich durch das Spindelgehäuse und von dort über eine entsprechende Anordnung von Kanälen und Ringnuten in die Spindel geleitet. Sämtliche Werkzeugmaschinen sind für den Einsatz mit Werkzeughaltern mit Steilkegel ausgelegt und benötigen eine gesonderte Druckluftzufuhr, die beim Einkuppeln bzw. Einspannen eines Werkzeughalters entsprechend angesteuert werden muß.

Die gesondert zu steuernde und bereitzustellende Luftzufuhr stellt dabei einen zusätzlichen Kostenfaktor dar und erfordert weiteren Konstruktionsaufwand, was allgemein von Nachteil ist. Ferner wurde festgestellt, daß dieses Abblasen teilweise nicht effektiv genug ist, es bleiben immer noch Späne am Werkzeughalter haften, insbesondere wenn sie infolge angetrockneten Kühlmittels dort sozusagen verklebt sind.

Aus der DE 30 12 049 A1 ist es bekannt, als Spülmittel zum Säubern des Werkzeughalters das Kühlmittel zu verwenden. Der Spülmittelstrom kann während des Werkzeugwechselvorgangs und gegebenenfalls auch beim Bearbeiten eines Werkstücks eingeschaltet sein. Konstruktive Details für einen optimalen Spülvorgang sind dieser Druckschrift jedoch nicht zu entnehmen.

Hiervon ausgehend ist es Aufgabe der vorliegenden Erfindung, die eingangs genannte Werkzeugmaschine so weiterzubilden, daß auf konstruktiv einfache Weise ein effektiveres Entfernen von Spänen von dem Werkzeughalter erreicht wird.

Bei der eingangs genannten Werkzeugmaschine wird diese Aufgabe erfindungsgemäß dadurch gelöst, daß die Spülvorrichtung den Werkzeughalter mit Kühlmittel aus der Kühlmittelversorgung spült und daß die Spülvorrichtung überwiegend zum Werkzeughalter tangential wirkende Düsen umfaßt, die gezielt an dem Werkzeughalter dessen Ringfläche, vorzugsweise überwiegend parallel, abspülen.

Ferner wird diese Aufgabe erfindungsgemäß bei dem eingangs genannten Verfahren dadurch gelöst, daß die Innenkühlung während des Überführens eines Werkzeughalters in die Arbeitsposition eingeschaltet wird, um durch den Innenkanal hindurch die Werkzeugaufnahme und/oder den Werkzeughalter mit Kühlmittel abzuspülen, wobei Spülstrahlen tangential zu dem Werkzeughalter verlaufen.

Die der Erfindung zugrunde liegende Aufgabe wird auf diese Weise vollkommen gelöst. Hinsichtlich des neuen Verfahrens haben die Erfinder der vorliegenden Anmeldung erkannt, daß ein Abspülen des Werkzeughalters mit Kühlmittel während des Einkuppelns trotz des erhöhten Kühlmittelverbrauchs einen signifikanten Vorteil gegenüber dem Abblasen mit Druckluft mit sich bringt. Durch das Kühlmittel werden nämlich die angetrockneten Späne wieder abgelöst, das getrocknete Kühlmittel gibt so die an ihm haftenden Späne wieder frei. Durch reines Abblasen mit Druckluft wäre dies nicht möglich.

Ein weiterer Vorteil besteht darin, daß die sowieso an der bekannten Werkzeugmaschine vorhandene Steuerung für die Innenkühlung verwendet werden kann, um das Abspülen während des Einkuppelns zu bewirken. Dieses Spülen entfernt nun aber nicht nur Späne von dem gerade unter der Werkzeugaufnahme befindlichen Werkzeughalter, vielmehr wird durch den hohen Druck, mit dem das Kühlmittel gefördert wird, auch die Werkzeugaufnahme innen gereinigt. Das Kühlmittel tritt nämlich unten an dem Spannzapfen aus, wird teilweise von dem Werkzeughalter zurück in die Werkzeugaufnahme reflektiert und entfernt dort ggf. anhaftende Späne.

Der Erfinder der vorliegenden Anmeldung hat somit erkannt, daß überraschenderweise ein Spülen im allerletzten Augenblick vor dem Einwechseln, also sozusagen eine Art "Endreinigung" des Steilkegels und/oder der Plananlage dazu führt, daß das Einspannen des Werkzeughalters reproduzierbar und ohne störende Späne etc. möglich ist, weil nämlich das verbleibende Kühlmittel auf z.B. der Ringfläche das Einspannen wider Erwarten doch nicht behindert. Mit anderen Worten, es ist nicht erforderlich, daß der Werkzeughalter im Bereich der Anlageflächen zur Spindel bzw. deren Stirnfläche trocken ist.

Der an sich negative zusätzliche Kühlmittelverbrauch für das zusätzliche Spülen kurz vor dem Einwechseln bietet also überraschenderweise doch große Vorteile, wobei gerade das gezielte Spülen des Steilkegels bzw. der Plananlage einen genauen und reproduzierbaren Sitz des Werkzeughalters und damit des von ihm gehaltenen Werkzeuges ermöglicht.

Dadurch, daß die Spülvorrichtung überwiegend tangential zu dem Werkzeughalter wirkende Düsen umfaßt, die gezielt an dem Werkzeughalter dessen Ringfläche vorzugsweise überwiegend parallel abspülen, erreicht man den Vorteil, daß ein Hochspritzen der auf der Ringfläche ggf. befindlichen Späne an den Steilkegel bzw. in die Werkzeugaufnahme verhindert wird. Die tangential zum Werkzeughalter, also zu seinem Steilkegel arbeitenden Düsen spritzen also die Mantelfläche und die Ringfläche seitlich ab, wobei durch die ferner vorzugsweise überwiegend parallele Ausrichtung ein Hochspülen bzw. Hochspritzen durch Abprallen von der Ringfläche verhindert wird. Mit anderen Worten, durch diese Anordnung der Düsen wird einerseits ein effektives Spülen des Werkzeughalters erreicht, wobei andererseits eine Folgeverschmutzung der Werkzeugaufnahme effektiv verhindert wird.

Dabei ist es dann bevorzugt, wenn die Werkzeugmaschine eine Innenkühlung umfaßt, die im Betrieb durch die Spindel und den Werkzeughalter hindurch ein im Einsatz befindliches Werkzeug mit Kühlmittel von einer Kühlmittelversorgung durchspült, und wenn eine Umschaltvorrichtung vorgesehen ist, die die Kühlmittelversorgung wahlweise von der Innenkühlung auf die Spülvorrichtung umschaltet.

Diese Maßnahme ist konstruktiv von Vorteil, die sowieso vorhandene Innenkühlung, mit der das Werkzeug während der Bearbeitung gekühlt und gespült wird, wird während des Werkzeugwechsels umgeschaltet auf die Spülvorrichtung, über die dann der Werkzeughalter beim Einwechsein abgespült wird.

Dabei ist es weiter bevorzugt, wenn die Düsen an der Werkzeugwechselvorrichtung angeordnet sind.

Hier ist von Vorteil, daß die Düsen den Bewegungen der Spindel folgen, so daß keine besondere Spülposition angefahren werden muß, wenn ein Werkzeugwechsel stattfindet. Damit kann der Vorteil der variablen Wechselebene beibehalten werden, gemäß der in jeder Position der Spindel Werkzeughalter ausgewechselt werden können, sofern es keine Kollisionen mit dem gerade bearbeiteten Werkstück gibt.

Andererseits ist es bevorzugt, wenn die Düsen am Spindelgehäuse im Bereich seiner Stirnfläche, vorzugsweise an der Stirnfläche selbst angeordnet sind.

Auch hier ist zunächst konstruktiv von Vorteil, daß die Düsen mitfahren, so daß keine besondere Spülposition angefahren werden muß und die Vorteile der variablen Wechselebene beibehalten werden können. Ein weiterer Vorteil liegt darin, daß die Düsen jetzt sehr dicht um die Werkzeugaufnahme herum angeordnet sind, so daß sie die eigentlich sehr schwer für Spülvorgänge zugängliche Planauflage des Werkzeughalters gut erreichen und insbesondere tangential und parallel abspülen können.

Dabei ist es weiter bevorzugt, wenn die Düsen an Fangstiften für die Greiferhände ausgebildet sind.

Auch diese Maßnahme ist konstruktiv von Vorteil, denn die Fangstifte sind sowieso an der Stirnfläche vorgesehen. Derartige Fangstifte sorgen für einen seitlichen Halt der am Werkzeug verbleibenden Greiferhand während des Verfahrens der Spindel. Ohne diese Fangstifte könnte nämlich die an einem langen Gestänge geführte Greiferhand während des sehr schnellen Verfahrens mit ruckweisem Anfahren und Bremsen hin- und herschwingen, was wiederum die Bearbeitungsgenauigkeit beeinträchtigen würde, denn die Schwingbewegungen der Greiferhand würden sich über den Werkzeughalter auf das Werkstück übertragen.

Diese Fangstifte sind an der Stirnfläche des Spindelgehäuses so angeordnet, daß die Greiferhand zwischen ihnen zu liegen kommt, wenn der Werkzeughalter in die Werkzeugaufnahme eingespannt ist. Das bedeutet jedoch, daß diese Fangstifte bereits so angeordnet sind, daß keine Kollisionen mit der Greiferhand erfolgen. Diese sozusagen strategisch günstig angeordneten Fangstifte können jetzt gleichzeitig dazu verwendet werden, um die Düsen der Spülvorrichtung zu tragen. Diese Düsen sind damit sehr dicht an dem einzuwechselnden Werkzeughalter vorgesehen, so daß ein effektives Spülen möglich wird.

Weiter ist es dabei bevorzugt, wenn die Fangstifte jeweils eine axial verlaufende Zufuhrbohrung und eine überwiegend tangential oder quer ausgerichtete Düsenbohrung aufweisen.

Diese Maßnahme ist konstruktiv von Vorteil, die Fangstifte müssen lediglich mit einer zentralen und einer seitlichen Bohrung versehen werden, wobei die Aufnahmebohrung bzw. das Aufnahme-Steckloch für die Fangstifte in der Stirnfläche des Spindelgehäuses dann noch über entsprechende Leitungen mit der Spülvorrichtung verbunden werden müssen.

Dabei ist es bevorzugt, wenn die Düsen über eine Ringleitung miteinander verbunden sind.

Hier ist noch von Vorteil, daß auf einfache Weise mehrere Düsen in der Spülvorrichtung vorgesehen und miteinander verbunden werden können.

Eine weitere Steigerung der Effizienz wird erreicht, indem oben von dem Innenkanal zumindest ein Spülkanal abzweigt, dessen zumindest eine Auslaßöffnung im Bereich der Werkzeugaufnahme angeordnet ist, die Werkzeugmaschine also sozusagen einen Bypass aufweist, so daß während des Einwechselns durch die Innenkühlung auch Kühlmittel über den Spülkanal geführt wird, wobei die Auslaßöffnung geeignet gelegt werden kann, so daß sozusagen ein doppelter Kühlmittelangriff auf den einzuwechselnden Werkzeughalter erfolgt. Die Auslaßöffnung kann z.B. im Spindelgehäuse seitlich neben der Werkzeugaufnahme sitzen.

Der höhere Kühlmittelverbrauch, der durch das ggf. nur kurzfristige Einschalten der Innenkühlung während des Überführens eines Werkzeughalters in seine Arbeitsposition erfolgt, wird durch die längeren Standzeiten mehr als kompensiert, die sich jetzt bei der Werkzeugaufnahme und den Werkzeughaltern ergeben, da diese nicht mehr durch klebengebliebene Späne beschädigt werden. Ein weiterer Vorteil des neuen Verfahrens sowie der neuen Werkzeugmaschine liegt selbstverständlich darin, daß wegen der effektiv entfernten Späne eine sehr genaue Plananlage erreicht wird, was die Bearbeitungsgenauigkeit deutlich erhöht, so daß die Wartungsintervalle verlängert werden können.

In einer Weiterbildung der neuen Werkzeugmaschine ist bevorzugt, wenn der Spülkanal in der Spindel verläuft, wobei die Auslaßöffnung vorzugsweise in einer Stirnseite der Spindel liegt.

Hier ist von Vorteil, daß die aus dem Stand der Technik bei der Druckluft bekannten Abdichtprobleme zwischen dem Spindelgehäuse und der drehbaren Spindel vermieden werden. Außerdem ist diese Anordnung konstruktiv sehr einfach, es ist lediglich erforderlich, den Innenkanal in der Spindel seitlich anzubohren und diesen Kanal dann nach unten zu der Stirnseite der Spindel zu führen. Im einfachsten Fall sind also lediglich zwei Bohrungen erforderlich, um den Bypass zu ermöglichen. Selbstverständlich können viele Spülkanäle umfänglich gleichverteilt in der Spindel vorgesehen werden, so daß eine entsprechende Anzahl von Auslaßöffnungen um die Werkzeugaufnahme herum angeordnet ist. Die dort dann austretenden Spülstrahlen treffen beim Einwechseln des Werkzeughalters dann sowohl auf die Außenkegelfläche als auch auf den verdickten Bund.

Dabei ist es dann bevorzugt, wenn die Werkzeugaufnahme für Werkzeughalter mit Hohlschaftkegel (HSK) ausgebildet ist, wobei an der Stirnseite eine Anlagefläche vorgesehen ist, die bei in die Werkzeugaufnahme eingespanntem HSK-Werkzeughalter mit dessen Ringfläche in Plananlage ist, wodurch der HSK-Werkzeughalter lagegenau positioniert wird, und wenn die Auslaßöffnung in der Anlagefläche liegt.

Hier ist von Vorteil, daß zum einen ein zielgenaues Abspülen der Ringfläche sowie durch zurückspritzendes Kühlmittel auch der Anlagefläche möglich ist. Ferner werden die verschiedenen Auslaßöffnungen sozusagen automatisch verschlossen, wenn nämlich die Anlagefläche und die Ringfläche miteinander in Plananlage sind. Damit ist sichergestellt, daß beim späteren Einsatz der Innenkühlung der Bypass verschlossen ist, so daß der Kühlmitteldruck ausreicht, um Kühlmittel durch das Werkzeug zu drücken. Da die Position eines HSK-Werkzeughalters durch die Plananlage zwischen Anlagefläche und Ringfläche bestimmt wird, ermöglicht die genannte Ausgestaltung der neuen Werkzeugmaschine ein effektives Entfernen der Späne genau dort, wo sie besonders stören würden.

Weiter ist es bevorzugt, wenn in der Spindel zum automatischen Einspannen von Werkzeughaltern eine Spannvorrichtung vorgesehen ist, die eine koaxial zu der Spindel in einer Innenbohrung längsverschieblich angeordnete Spannstange umfaßt, die von dem Innenkanal in Längsrichtung durchsetzt ist und mit einem Kühlmittelröhrchen eines Werkzeughalters bei dessen Einspannen in Eingriff gelangt, so daß dieser durch den Innenkanal mit Kühlmittel versorgt wird.

Diese Maßnahme verbindet die an sich bekannte Innenkühlung mit Übergabe mittels eines Kühlmittelröhrchens an das zu kühlende Werkzeug auf konstruktiv einfache Weise mit dem Bypass infolge des Spülkanals. Ein weiterer Vorteil besteht darin, daß sich beim Einspannen, also dann, wenn das Kühlmittelröhrchen in die Spannstange eingreift, dort allmählich ein zunehmender Gegendruck aufbaut, der durch die kleinen Bohrungen in dem Werkzeug bedingt ist, in das das Kühlmittel hineingepreßt wird. Durch diesen Gegendruck wird jetzt immer mehr Kühlmittel unter immer höherem Druck aus den Auslaßöffnungen ausgestoßen, wodurch ein immer stärkeres und damit sehr effektives Abblasen sowohl der Ringfläche als auch der Anlagefläche erfolgt, bis bei Plananlage zwischen Anlagefläche und Ringfläche die Auslaßöffnungen verschlossen werden.

In einer Weiterbildung ist es bevorzugt, wenn in der Spannstange zumindest eine in den Innenkanal mündende Querbohrung vorgesehen ist, die mit einem in der Spindel vorgesehenen, zu der Innenbohrung offenen Übergaberaum zusammenwirkt, in den der Spülkanal mündet, wobei vorzugsweise der Übergaberaum ein Ringraum ist, der sich um die Spannstange herum erstreckt, wobei ferner vorzugsweise oberhalb und unterhalb des Ringraumes in der Innenbohrung Dichtungen vorgesehen sind, die zwischen der Spannstange und der Spindel sitzen.

Diese Maßnahmen sind konstruktiv von Vorteil, sie ermöglichen eine einfache Übergabe des Kühlmittels von der längsverschieblichen Spannstange in die radial zu der Spannstange abgehenden Spülkanäle, wobei durch die beiden Dichtungen eine einfache Abdichtung nach oben und nach unten erfolgt. Diese Dichtungen beeinträchtigen die Funktion der Spannvorrichtung nicht, denn bei einem Werkzeugwechsel wird die Spannstange lediglich einmal um einen gewissen Hub nach unten gefahren, um das gerade eingespannte Werkzeug zu lösen, und dann beim Einspannen des neuen Werkzeuges um diesen Hub wieder zurückgezogen.

Weiter ist es noch bevorzugt, wenn der Abstand der beiden Dichtungen in Längsrichtung der Spannstange größer ist als ein von der Spannstange beim Einspannen eines Werkzeughalters durchzuführender Hub.

Hier ist von Vorteil, daß während des ganzen Hubes der Spannstange der Innenkanal mit dem Spülkanal kommunizieren kann, so daß während des gesamten Einspannvorganges eines neuen Werkzeughalters dieser sowohl über den Innenkanal als auch über den Spülkanal mit Spülmittel abgespült werden kann.

Andererseits ist es bevorzugt, wenn die Spannstange von einer axial unverschieblichen Formbuchse umgeben ist, in der eine mit dem Spülkanal verbundene Querbohrung vorgesehen ist, mit der die Querbohrung in der Spannstange in Abhängigkeit von deren axialer Lage kommuniziert.

Hier ist von Vorteil, daß die Spülvorrichtung sozusagen automatisch ein- und abgeschaltet wird, wenn die Spannstange verschoben wird. Bei ausgefahrener Spannstange kommunizieren die beiden Querbohrungen miteinander, so daß beim Einschalten der Innenkühlung aus dem Innenkanal Kühlmittel in die Spülkanäle gelangt.

Allgemein ist es noch bevorzugt, wenn in dem Innenkanal ein Rückschlagventil angeordnet ist.

Hier ist von Vorteil, daß das Abblasen durch den Innenkanal selbst, also zentrisch aus der Werkzeugaufnahme heraus mit einem einstellbaren Druck erfolgt, während bei niedrigerem Druck lediglich ein Abblasen über den Bypass erfolgt.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: einen schematischen Längsschnitt durch eine neue Werkzeugmaschine, bei der Düsen einer Spülvorrichtung an der Werkzeugwechselvorrichtung angeordnet sind;
- Fig. 2: die Werkzeugmaschine aus Fig. 1 in einem vergrößerten Ausschnitt, wobei gemäß einem zweiten Ausführungsbeispiel die Düsen der Spülvorrichtung an einer Stirnfläche des Spindelgehäuses vorgesehen sind;
- Fig. 3: eine Draufsicht auf einen Werkzeugwechsler, aus der die Richtung der Spülstrahlen zu ersehen ist;
- Fig. 4: in einer schematischen Seitenansicht und im Längsschnitt eine Werkzeugmaschine, auf der das neue Verfahren durchgeführt werden kann;
- Fig. 5: eine erfindungsgemäße Weiterbildung der Werkzeugmaschine aus Fig. 4 im Bereich der Spindel, wobei in einem schematischen Längsschnitt der untere Teil der Spindel sowie darunter ein HSK-Werkzeughalter angedeutet sind; und
- Fig. 6: einen Ausschnitt der in Fig. 5 gezeigten Werkzeugmaschine im Bereich der Spannstange.

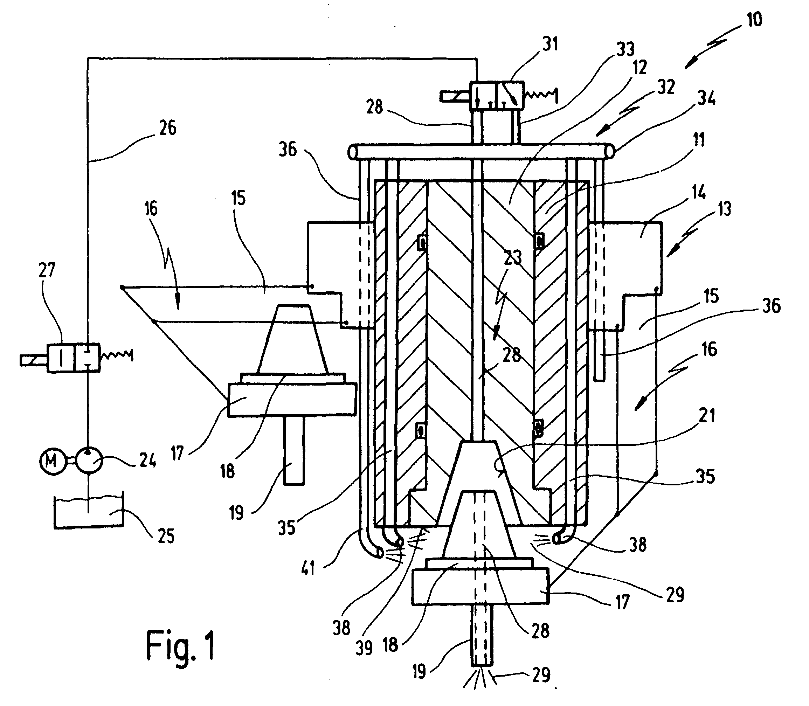

In Fig. 1 ist schematisch in einem ersten Ausführungsbeispiel eine Werkzeugmaschine 10 angeordnet, die ein Spindelgehäuse 11 aufweist, in dem eine Spindel 12 drehbar gelagert ist.

Die Werkzeugmaschine 10 weist eine Werkzeugwechselvorrichtung 13 auf, die einen an dem Spindelgehäuse 11 höhenverschiebbar angeordneten Wechslerkorb 14 umfaßt, der auch Hülse genannt wird. An dem Wechslerkorb 14 sind mehrere Werkzeugwechsler 15 vorgesehen, von denen in Fig. 1 zwei dargestellt sind.

Jeder Werkzeugwechsler 15 umfaßt ein Parallelogrammgestänge 16, das eine Greiferhand 17 trägt. In jeder Greiferhand 17 ist ein Werkzeughalter 18 angeordnet, an dem ein Werkzeug 19 befestigt ist, das jeweils nur schematisch dargestellt ist.

Der in Fig. 1 linke Werkzeugwechsler 15 hat den von ihm getragenen Werkzeughalter 18 in dessen Magazinposition hochgeschwenkt, während der rechte Werkzeugwechsler 15 den von ihm gehaltenen Werkzeughalter 18 in dessen Arbeitsposition verschwenkt, wobei er gerade in eine Werkzeugaufnahme 21 in der Spindel 12 eingespannt wird. Derartige Werkzeughalter 18 können Steilkegel-Werkzeughalter oder aber Hohlschaftkegel-Werkzeughalter sein, für die jeweils in der Spindel 12 geeignete Spannvorrichtungen vorgesehen sind, die an sich bekannt sind.

Es sei noch erwähnt, daß die Parallelogrammgestänge 16 in an sich ebenfalls bekannter Weise so ausgebildet sind, daß die Werkzeughalter 18 beim Überführen von ihrer Magazinposition in die Arbeitsposition im wesentlichen vertikalachsig ausgerichtet bleiben.

Bei der insoweit beschriebenen Werkzeugmaschine 10 ist eine Innenkühlung 23 vorgesehen, die eine Pumpe 24 umfaßt, die aus einem Kühlmittelbehälter 25 Kühlmittel durch eine Zuleitung 26 zu der Werkzeugmaschine 10 pumpt. In der Zuleitung 26 ist noch ein Absperrschieber 27 vorgesehen.

Die Zuleitung 26 geht in eine Leitung 28 über, die sich durch die Spindel 12 sowie den Werkzeughalter 18 in das Werkzeug 19 erstreckt und dieses im Betrieb spült und kühlt, wobei an seiner Spitze Kühlmittel austritt, was bei 29 angedeutet ist.

Zwischen der Zuleitung 26 und der Leitung 28 ist eine Umschaltvorrichtung 31 vorgesehen, die die Zuleitung 26 wahlweise mit der Leitung 28 oder einer bei 32 angedeuteten Spülvorrichtung verbindet. Die Spülvorrichtung 32 umfaßt eine Leitung 33, die mit einer Ringleitung 34 verbunden ist. Die Ringleitung 34 ist mit mehreren Stichleitungen 35, 36 verbunden, die wahlweise oder gemeinsam einzeln oder zu mehreren vorgesehen sein können.

Die Stichleitung 35 endet in einer Düse 38, die in einer Stirnfläche 39 des Spindelgehäuses 11 vorgesehen ist, während die Stichleitung 36 mit einer Düse 41 verbunden ist, die an dem Wechslerkorb 14 befestigt ist. Die Düsen 38 und/oder 41 sind so nahe bei der Werkzeugaufnahme 21 angeordnet, daß von ihnen während des Einwechselns eines Werkzeughalters 18 abgegebenes Kühlmittel 29 unmittelbar auf den Werkzeughalter 18 auftrifft und diesen spült. Dazu wird die Umschaltvorrichtung 31 so umgeschaltet, daß die Zuleitung 26 jetzt mit der Leitung 33 und damit über die Ringleitung 34 sowie die Stichleitungen 35 und 36 mit den Düsen 38 und/oder 41 verbunden ist.

Während des Einwechselns des Werkzeughalters wird damit jegliche Art von Verschmutzung von dem Werkzeughalter abgespült, so daß eine gute und sichere Plananlage des Werkzeughalters 18 in der Werkzeugaufnahme 21 möglich wird.

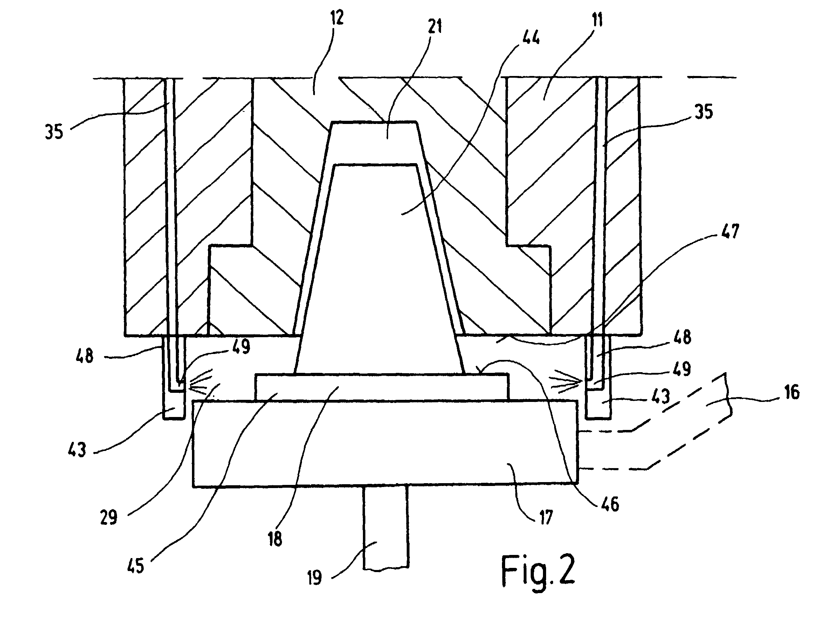

In Fig. 2 ist der Bereich der Werkzeugaufnahme 21 der Werkzeugmaschine 10 aus Fig. 1 vergrößert dargestellt, wobei die Spülvorrichtung 32 in einem zweiten Ausführungsbeispiel gezeigt ist.

In Fig. 2 sind wieder die Stichleitungen 35 zu erkennen, die mit der Ringleitung 34 aus Fig. 1 verbunden sind. Die Stichleitungen 35 enden jetzt in Fangstiften 43, die bei eingespanntem Werkzeughalter 18 der Greiferhand 17 seitlichen Halt verleihen, die während der Bearbeitung von Werkstücken durch das gehaltene Werkzeug 19 am Werkzeughalter 18 verbleibt. Die Fangstifte 43 sorgen dafür, daß bei den rückartigen Bewegungen der Spindel 12 die Greiferhand 17 nicht seitlich ausschert.

Der in Fig. 2 von der Greiferhand 17 gehaltene Werkzeughalter 18 ist ein HSK-Werkzeughalter mit einem Hohlschaftkegel 44 sowie einem verdickten Bund 45, an dem die Greiferhand 17 angreift. Der Bund 45 weist eine Ringfläche 46 auf, mit der der Werkzeughalter 18 in Plananlage mit einer Stirnseite 47 der Spindel 12 gelangt. Durch die Plananlage zwischen Ringfläche 46 und Stirnseite 47 wird die lagegenaue Ausrichtung des Werkzeughalters 18 in der Spindel 12 bewirkt.

Zumindest einige der Fangstifte 43 sind mit einer axial verlaufenden Zufuhrbohrung 48 versehen, die mit der Stichleitung 35 kommuniziert. Quer zu der Zufuhrbohrung 48 verläuft eine Düsenbohrung 49, durch die Kühlmittel 29 aus dem Fangstift 43 ausgeblasen wird. Das Kühlmittel 29 trifft dabei entweder auf den Hohlschaftkegel 44 oder auf die Ringfläche 46 auf, je nachdem, wie weit der Werkzeughalter 18 während des Einwechselns bereits in die Werkzeugaufnahme 21 eingeschoben wurde.

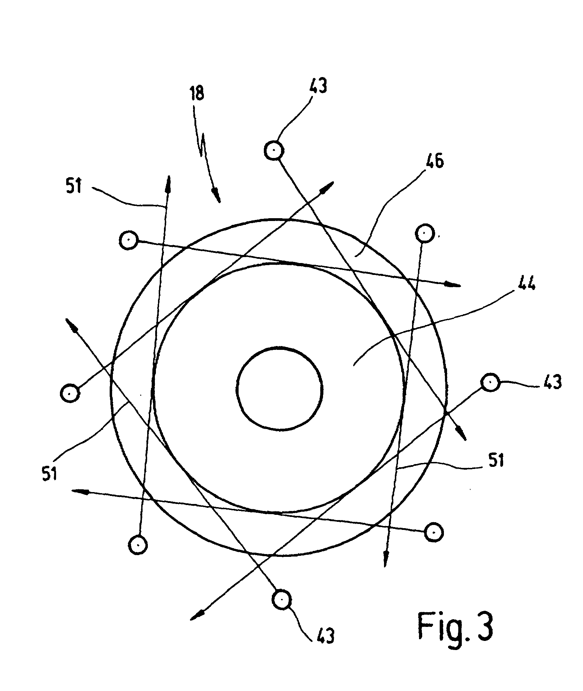

In Fig. 3 ist in einer Draufsicht auf den Werkzeughalter 18 zu erkennen, daß die Düsenbohrungen 49 derartige Spülstrahlen 51 abgeben, die tangential zu dem Hohlschaftkegel 44 verlaufen, wobei die Spülstrahlen 51 ferner etwa parallel zu der Ringfläche 46 die letztere abspülen, so daß ein Hochspritzen von abgespülten Spänen in die Werkzeugaufnahme 21 verhindert wird.

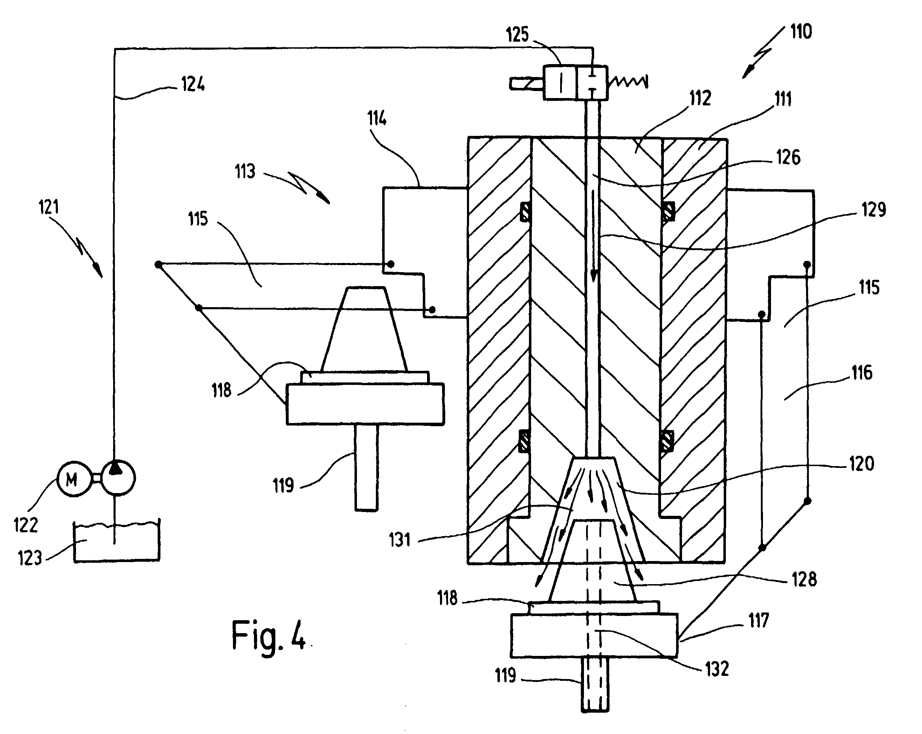

In Fig. 4 ist schematisch eine weitere Werkzeugmaschine 110 gezeigt, die ein Spindelgehäuse 111 aufweist, in dem eine Spindel 112 drehbar gelagert ist.

Die Werkzeugmaschine 110 umfaßt ebenfalls eine Werkzeugwechselvorrichtung 113, die einen an dem Spindelgehäuse 111 höhenverschiebbar angeordneten Wechslerkorb 114 umfaßt, der auch Hülse genannt wird. An dem Wechslerkorb 114 sind mehrere Werkzeugwechsler 115 vorgesehen, von denen in Fig. 4 zwei schematisiert dargestellt sind.

Jeder Werkzeugwechsler 115 umfaßt ein Parallelogrammgestänge 116, das eine Greiferhand 117 trägt. In jeder Greiferhand 117 ist ein Werkzeughalter 118 angeordnet, an dem ein Werkzeug 119 befestigt ist, das jeweils nur schematisch dargestellt ist.

Der in Fig. 4 linke Werkzeugwechsler 115 hat den von ihm getragenen Werkzeughalter 118 in dessen Magazinposition hochgeschwenkt, während der rechte Werkzeugwechsler 115 den von ihm gehaltenen Werkzeugwechsler 118 unter eine Werkzeugaufnahme 120 geschwenkt hat, die in der Spindel 112 zentrisch vorgesehen ist. Wird jetzt die Hülse 114 in Fig. 4 nach oben geschoben, so gelangt der Werkzeughalter 118 in die Werkzeugaufnahme 120 hinein und befindet sich dann in seiner Arbeitsposition.

Bei der insoweit beschriebenen Werkzeugmaschine 110 ist eine Innenkühlung 121 vorgesehen, die eine Pumpe 122 umfaßt, die aus einem Kühlmittelbehälter 123 Kühlmittel durch eine Zuleitung 124 zu der Werkzeugmaschine 110 pumpt. In der Zuleitung 124 ist noch ein Absperrschieber 125 vorgesehen, über den die Innenkühlung 121 eingeschaltet bzw. ausgeschaltet wird.

An den Absperrschieber 125 schließt sich ein Innenkanal 126 an, der die Spindel 112 zentrisch durchsetzt und unten in der Werkzeugaufnahme 20 mündet, unter der in Fig. 4 der Werkzeughalter 118 mit seinem Kegel 128 sitzt.

Wenn jetzt' die Innenkühlung 121 durch Betätigen des Absperrschiebers 125 eingeschaltet wird, so fließt Kühlmittel in Richtung eines Pfeiles 129 durch den Innenkanal 126 und tritt unten als Abspülstrahl 131 aus, der den Kegel 128 außen von anhaftenden Spänen befreit, bevor er in die Werkzeugaufnahme 120 eingespannt wird.

Bei dem Ausführungsbeispiel gemäß Fig. 4 ist der Kegel 128 ein üblicher Steilkegel, der durch an sich bekannte Spannzangen in die Werkzeugaufnahme 120 eingezogen wird, die aus Gründen der Übersichtlichkeit in Fig. 4 nicht dargestellt sind. Wenn der Werkzeughalter 118 in die Werkzeugaufnahme 120 eingespannt ist, dann fließt das Kühlmittel von dem Innenkanal 126 in eine Bohrung 132 des Werkzeughalters, von wo es sich durch kleine, nicht dargestellte Kanäle in das Werkzeug 119 verteilt, um dieses im Betrieb von innen zu kühlen.

Eine Werkzeugmaschine, wie sie in Fig. 4 gezeigt ist, befindet sich auf dem der Öffentlichkeit nicht zugängigen Werksgelände der Anmelderin.

Diese Werkzeugmaschine wird nun auf neue Weise beim Einwechseln eines Werkzeuges 118 so betrieben, daß die Innenkühlung 121 zumindest vorübergehend eingeschaltet wird, wenn ein neuer Werkzeughalter 118 mit seinem Steilkegel 128 in die Werkzeugaufnahme 120 eingesetzt wird. Der dabei entstehende Abspülstrahl 131 reinigt zum einen die Werkzeugaufnahme 120 von innen und spült zum anderen anhaftende Späne von der Außenfläche des Kegels 128 sowie den verdickten Bund des Werkzeughalters 118 ab.

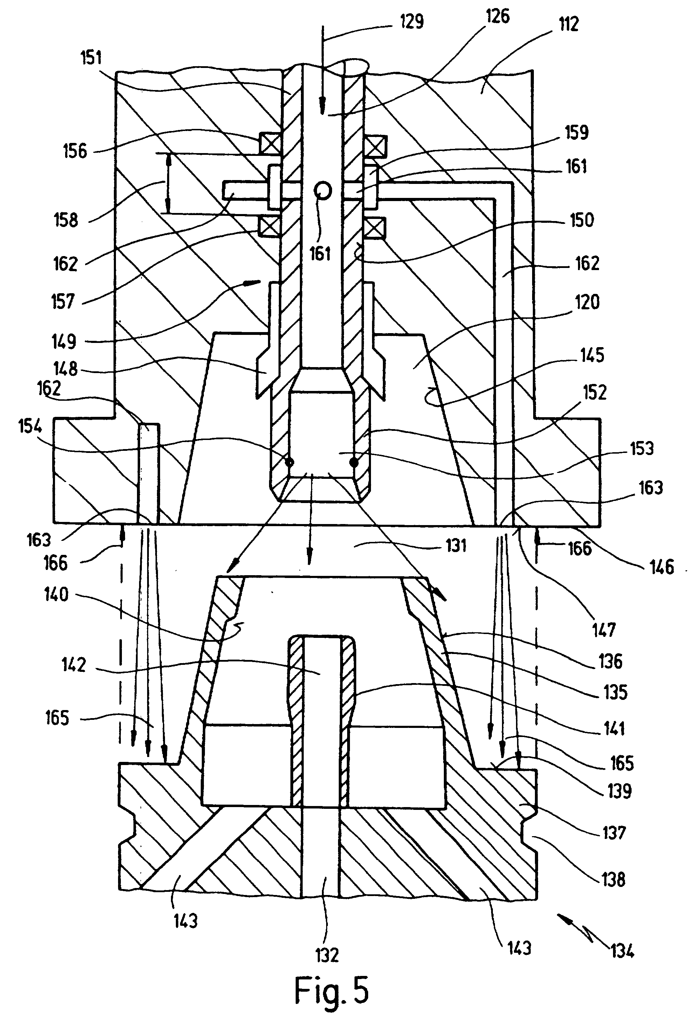

In dem Ausführungsbeispiel gemäß Fig. 5 ist eine Weiterbildung der Werkzeugmaschine aus Fig. 4 gezeigt, wobei lediglich der untere Bereich der Spindel 112 sowie ein unter der Spindel 112 angeordneter Hohlschaftkegel-Werkzeughalter 134 schematisch gezeigt sind. Dieser HSK-Werkzeughalter 134 weist einen an sich bekannten Hohlschaftkegel 135 auf, der eine konische Außenfläche 136 besitzt. Nach unten schließt sich an dem Hohlschaftkegel 135 ein verdickter Bund 137 an, an dem außen umlaufend eine Greifernut 138 vorgesehen ist, an der die Greiferhand 117 (Fig. 4) in bekannter Weise angreift. Der verdickte Bund 137 weist eine nach oben zeigende Ringfläche 139 auf.

In seinem Inneren ist der Hohlschaftkegel 135 zunächst mit einem Widerlager 140 versehen, wobei ferner zentrisch ein Kühlmittelröhrchen 141 vorgesehen ist, in dem eine Durchgangsbohrung 142 verläuft. Die Durchgangsbohrung 142 geht in die schon aus Fig. 4 bekannte Bohrung 132 über, die sich zu dem Werkzeug verzweigt. Ferner sind in Fig. 5 noch Ablaufbohrungen 143 zu erkennen, durch die aus dem Inneren des Hohlschaftkegels 135 Kühlmittel abgeführt wird.

Der insoweit beschriebene Hohlschaftkegel-Werkzeughalter 134 ist der Öffentlichkeit noch nicht zugänglich gemacht worden, seine Entwicklung wurde bei der Anmelderin soeben erst abgeschlossen.

Komplementär zu der konischen Außenfläche 136 ist in der Werkzeugaufnahme 120 eine Innenkegelfläche 145 vorgesehen. Die Spindel 112 weist an ihrer Stirnseite 46 ferner eine Anlagefläche 147 auf, die mit der Ringfläche 39 des verdickten Bundes 137 in Plananlage gelangt und die Position des HSK-Werkzeughalters 134 in der Spindel 112 bestimmt, wenn er durch Spannzangen 148 einer an sich bekannten, automatischen Spannvorrichtung 149 eingespannt wurde.

Die Spannvorrichtung 149 ist für HSK-Werkzeughalter 134 allgemein bekannt, so daß die Spannzangen 148 nur andeutungsweise gezeigt sind.

In einer Innenbohrung 150 der Spindel 112 verläuft eine Spannstange 151, die an ihrem unteren Ende einen verdickten Spannzapfen 152 trägt. In dem Spannzapfen 152 ist eine nach unten offene, erweiterte Bohrung 153 vorgesehen, in deren äußerem Bereich ein innerer Dichtring 154 angeordnet ist.

In Fig. 5 ist zu erkennen, daß der Innenkanal 126 zentrisch in der Spannstange 151 verläuft und in die erweiterte Bohrung 153 mündet.

Oberhalb der Spannvorrichtung 149 sind zwischen Spindel 112 und Spannstange 151 eine obere sowie eine untere Dichtung 156, 157 vorgesehen, die zueinander einen Abstand 158 haben und zwischen sich einen zur Spannstange 151 hin offenen Ringraum 159 aufweisen, der in einer Wand der Innenbohrung 150 vorgesehen ist und die Spannstange 151 umschließt.

In der Spannstange 151 sind mehrere Querbohrungen 161 vorgesehen, von denen in Fig. 5 drei gezeigt sind. Von dem Ringraum 159 erstrecken sich Spülkanäle 162 zunächst radial zur Seite und dann nach unten, wo sie in Auslaßöffnungen 163 münden, die in der Anlagefläche 157 angeordnet sind und bei 165 angedeutete Spülstrahlen abgeben, wenn die Innenkühlung 121 (Fig. 4) eingeschaltet ist.

In der in Fig. 5 gezeigten Situation soll der HSK-Werkzeughalter 134 in die Werkzeugaufnahme 20 eingespannt werden, wozu er in Fig. 5 nach oben bewegt wird. Um mögliche Späne von der konischen Außenfläche 136, der Ringfläche 139 sowie der Anlagefläche 147 zu entfernen, wird während dieses Einspannvorgangs die Innenkühlung 121 zumindest zeitweise eingeschaltet. Das Kühlmittel strömt dabei in den Innenkanal 126 und tritt unten aus dem Spannzapfen 152 als Abspülstrahl 131 aus, der bereits aus Fig. 4 bekannt ist. Ein Teil des Kühlmittels gelangt über die Querbohrungen 161 in den Ringraum 159 und von dort über die Spülkanäle 162 zu den Auslaßöffnungen 163, wo es als Spülstrahlen 165 austritt. Diese Spülstrahlen 165 treffen wegen der Lage der Auslaßöffnungen 163 in der Anlagefläche 147 genau auf die Ringfläche 139, so daß sie diese effektiv von eventuell anhaftenden Spänen befreien. Durch gestrichelte Pfeile 166 ist hochspritzendes Kühlmittel bezeichnet, das die Anlagefläche 147 reinigt.

Beim Hochfahren des HSK-Werkzeughalters 134 in die Werkzeugaufnahme 20 hinein gelangt zunächst Kühlmittel in den Innenraum des HSK-Werkzeughalters 134, das jedoch durch die Ablaufbohrungen 143 wieder abgeführt wird. Schließlich greift das Kühlmittelröhrchen 141 mit seinem verdickten Kopf in den Spannzapfen 152 ein, wobei der Dichtring 154 für eine gute Abdichtung zwischen Spannzapfen 152 und Kühlmittelröhrchen 141 sorgt. Je weiter sich das Kühlmittelröhrchen 141 dem Spannzapfen 152 nähert und sich in diesen hineinschiebt, desto größer wird der Gegendruck, den das Kühlmittel in dem Innenkanal 126 erfährt. Dieser Gegendruck ist insbesondere durch die feinen Bohrungen in dem zu durchspülenden Werkzeug bedingt, die von der Bohrung 132 aus versorgt werden.

Dieser Gegendruck führt jetzt dazu, daß immer mehr Kühlmittel unter immer höherem Druck in die Spülkanäle 162 gelangt, so daß die Spülstrahlen 165 immer stärker werden, wodurch eine immer bessere Reinigungswirkung erzielt wird.

Wenn der HSK-Werkzeughalter 134 schließlich ganz in die Werkzeugaufnahme 120 eingeschoben wurde, greifen die Spannzangen 128 hinter die Widerlager 140 und ziehen die Ringfläche 139 in Plananlage zu der Anlagefläche 147, wodurch die Position des HSK-Werkzeughalters 134 bestimmt wird. In diesem Zusammenhang wird dann die Spannstange 151 zurückgezogen, so daß sie mit ihrem verdickten Spannzapfen 152 die Spannzangen 148 in bekannter Weise nach außen drückt. Der Hub, den die Spannstange 151 dabei vollzieht, ist vorzugsweise geringer als der Abstand 158 der Dichtungen 156 und 157, so daß im Betrieb mit Innenkühlung kein Kühlmittel zwischen Spannstange 151 und Spindel 112 entweichen kann. Ein Entweichen durch die Auslaßöffnungen 163 wird durch die feste Plananlage zwischen Ringfläche 139 und Anlagefläche 147 verhindert.

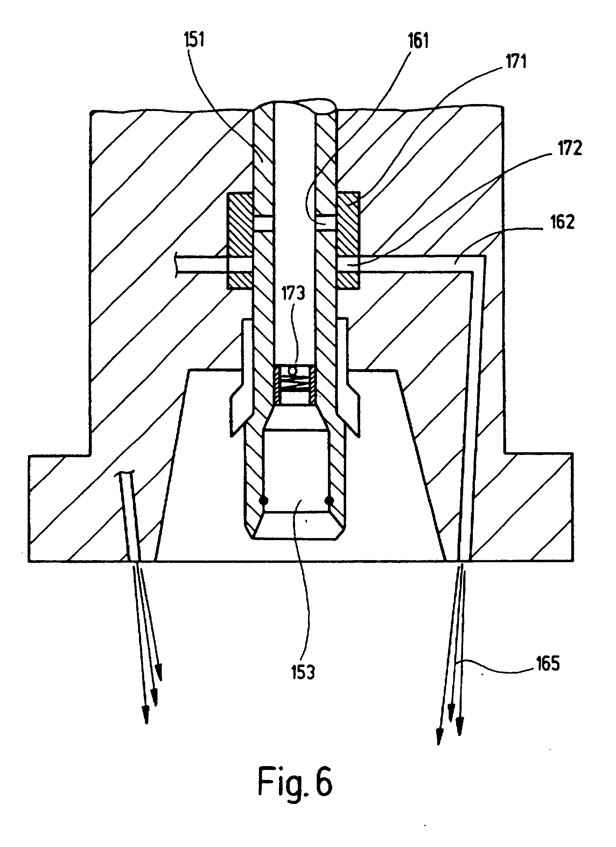

In Fig. 6 ist im Ausschnitt die in Fig. 5 gezeigte Werkzeugmaschine in einem weiteren Ausführungsbeispiel gezeigt, bei dem der Bypass durch die Spülkanäle 162 mittels einer axial unverschieblichen Formbuchse 171 geregelt wird, die die Spannstange 151 im Bereich der Querbohrung 161 umgibt.

In der Formbuchse 171 ist ebenfalls eine Querbohrung 172 vorgesehen, die in Abhängigkeit von der axialen Lage der Spannstange 151 mit der Querbohrung 161 kommuniziert. Genauer gesagt liegen die beiden Querbohrungen 161, 172 einander genau gegenüber, wenn die Spannzange 151 ausgefahren ist, der jeweilige Werkzeughalter also ausgekuppelt wurde, sich ggf. aber noch in der jeweiligen Werkzeugaufnahme befindet.

Wird jetzt die Innenkühlung angeschaltet, so gelangt Kühlmittel durch den Innenkanal 126 und die Querbohrungen 161, 172 in die Spülkanäle 162 und von dort auf den Werkzeughalter.

Auf diese Weise werden die Spülstrahlen 165 unabhängig von dem Ein- und Ausschalten der Innenkühlung nur dann freigegeben, wenn die Spannstange 151 nach unten gefahren ist.

Am unteren Ende des Innenkanals 126, dort wo er in die erweiterte Bohrung 153 übergeht, ist noch ein Rückschlagventil 173 angeordnet, das auch bei den Ausführungsbeispielen der Fig. 1 bis 4 verwendet werden kann. Dieses Rückschlagventil 173 läßt Kühlmittel erst ab einem bestimmten Druck, z.B. mindestens 10 bar durch, so daß bei abgeschalteter Innenkühlung kein Kühlmittel nach unten heraustropfen kann. Ferner kann bei einem geringeren Druck, der z.B. über den Motor 122 eingestellt werden kann, trotz eingeschalteter Innenkühlung nur über die Spülkanäle 162 Kühlmittel auf den Werkzeughalter 118 gelangen, wodurch unter bestimmten Bedingungen ein effizienterer Einsatz von Kühlmittel dann möglich wird, wenn aus der erweiterten Bohrung 153 nach unten austretendes Kühlmittel keinen Reinigungseffekt haben würde.

## Patentansprüche

1. Werkzeugmaschine mit einer Spindel (12, 112), die eine Werkzeugaufnahme (21, 120) für Werkzeughalter (18, 118, 134) aufweist, einer Werkzeugwechselvorrichtung (13, 113) zum Überführen der Werkzeughalter (18, 118, 134) zwischen deren jeweiliger Magazinposition und einer Arbeitsposition in der Werkzeugaufnahme (21, 120), und einer Innenkühlung (23, 121), die durch einen längs durch die Spindel (12, 112) verlaufenden Innenkanal (28, 126) einem in die Werkzeugaufnahme (21, 120) eingespannten Werkzeughalter (18, 118, 134) Kühlmittel von einer Kühlmittelversorgung (24, 25, 122, 123) zuführt, um ein im Einsatz befindliches Werkzeug (19, 119) zu durchspülen, wobei eine Spülvorrichtung vorgesehen ist, um den Werkzeughalter (18, 118, 134) während seines Einwechselns in die Werkzeugaufnahme (21, 120) zu spülen, **dadurch gekennzeichnet, daß** die Spülvorrichtung den Werkzeughalter (21, 120) mit Kühlmittel aus der Kühlmittelversorgung (24, 25, 122, 123) spült und daß die Spülvorrichtung (32) zum Werkzeughalter (18) tangential wirkende Düsen (38, 41, 49) umfaßt, die gezielt an dem Werkzeughalter (18) dessen Ringfläche (46), vorzugsweise überwiegend parallel, abspülen.

2. Werkzeugmaschine nach Anspruch 1, **dadurch gekennzeichnet, daß** eine Umschaltvorrichtung (31) vorgesehen ist, die die Kühlmittelversorgung (24, 25) wahlweise von der Innenkühlung (23) auf die Spülvorrichtung (32) umschaltet.

3. Werkzeugmaschine nach Anspruch 1 oder 2, **dadurch gekennzeichnet, daß** die Düsen (41) an der Werkzeugwechselvorrichtung (13) angeordnet sind.

4. Werkzeugmaschine nach einem der Ansprüche 1 bis 3, **dadurch gekennzeichnet, daß** die Düsen (38, 49) an dem Spindelgehäuse (11) im Bereich seiner Stirnfläche (39) angeordnet sind.

5. Werkzeugmaschine nach Anspruch 4, **dadurch gekennzeichnet, daß** die Düsen (38, 49) an der Stirnfläche (39) angeordnet sind.

6. Werkzeugmaschine nach einem der Ansprüche 1 bis 5, **dadurch gekennzeichnet, daß** die Düsen an Fangstiften (43) für die Greiferhände (17) ausgebildet sind.

7. Werkzeugmaschine nach Anspruch 6, **dadurch gekennzeichnet, daß** die Fangstifte (43) jeweils eine axial verlaufende Zufuhrbohrung (48) und eine überwiegend tangential oder quer ausgerichtete Düsenbohrung (49) aufweisen.

8. Werkzeugmaschine nach einem der Ansprüche 1 bis 7, **dadurch gekennzeichnet, daß** die Düsen (38, 41, 49) über eine Ringleitung (34) miteinander verbunden sind.

9. Werkzeugmaschine nach Anspruch 1, **dadurch gekennzeichnet, daß** von dem Innenkanal (126) zumindest ein Spülkanal (152) abzweigt, dessen zumindest eine Auslaßöffnung (163) im Bereich der Werkzeugaufnahme (120) angeordnet ist.

10. Werkzeugmaschine nach Anspruch 9, **dadurch gekennzeichnet, daß** der Spülkanal (162) in der Spindel (112) verläuft.

11. Werkzeugmaschine nach Anspruch 10, **dadurch gekennzeichnet, daß** die Auslaßöffnung (163) in einer Stirnseite (146) der Spindel (112) liegt.

12. Werkzeugmaschine nach Anspruch 11, **dadurch gekennzeichnet, daß** die Werkzeugaufnahme (120) für Werkzeughalter (134) mit Hohlschaftkegel (HSK) ausgebildet ist, wobei an der Stirnseite (146) eine Anlagefläche (147) vorgesehen ist, die bei in die Werkzeugaufnahme (120) eingespanntem HSK-Werkzeughalter (134) mit dessen Ringfläche (139) in Plananlage ist, wodurch der HSK-Werkzeughalter (134) lagegenau positioniert wird, und daß die Auslaßöffnung (163) in der Anlagefläche (147) liegt.

13. Werkzeugmaschine nach einem der Ansprüche 9 - 12, **dadurch gekennzeichnet, daß** in der Spindel (112) zum automatischen Einspannen von Werkzeughaltern (118, 134) eine Spannvorrichtung (149) vorgesehen ist, die eine koaxial zu der Spindel (112) in einer Innenbohrung (150) längsverschieblich angeordnete Spannstange (151) umfaßt, die von dem Innenkanal (126) in Längsrichtung durchsetzt ist und mit einem Kühlmittelröhrchen (141) eines Werkzeughalters (118, 134) bei dessen Einspannen in Eingriff gelangt, so daß dieser durch den Innenkanal (126) mit Kühlmittel versorgt wird.

14. Werkzeugmaschine nach Anspruch 13, **dadurch gekennzeichnet, daß** in der Spannstange (151) zumindest eine in den Innenkanal (126) mündende Querbohrung (162) vorgesehen ist, die mit einem in der Spindel (112) vorgesehenen, zu der Innenbohrung (150) offenen Übergaberaum zusammenwirkt, in den der Spülkanal (162) mündet.

15. Werkzeugmaschine nach Anspruch 14, **dadurch gekennzeichnet, daß** der Übergaberaum ein Ringraum (159) ist, der sich um die Spannstange (151) herum erstreckt.

16. Werkzeugmaschine nach Anspruch 15, **dadurch gekennzeichnet, daß** oberhalb und unterhalb des Ringraumes (159) in der Innenbohrung (150) Dichtungen (156, 157) vorgesehen sind, die zwischen der Spannstange (151) und der Spindel (112) sitzen.

17. Werkzeugmaschine nach Anspruch 16, **dadurch gekennzeichnet, daß** der Abstand (158) der beiden Dichtungen (156, 157) in Längsrichtung der Spannstange (151) größer ist als ein von der Spannstange (151) beim Einspannen eines Werkzeughalters (118, 134) durchzuführender Hub.

18. Werkzeugmaschine nach Anspruch 14, **dadurch gekennzeichnet, daß** die Spannstange (151) von einer axial unverschieblichen Formbuchse (171) umgeben ist, in der eine mit dem Spülkanal (162) verbundene Querbohrung (172) vorgesehen ist, mit der die Querbohrung (162) in der Spannstange (151) in Abhängigkeit von deren axialer Lage kommuniziert.

19. Werkzeugmaschine nach einem der Ansprüche 1 bis 18, **dadurch gekennzeichnet, daß** in dem Innenkanal (28, 126) ein Rückschlagventil (173) angeordnet ist.

20. Verfahren zum Betreiben einer Werkzeugmaschine (110) mit einer Spindel (112), die eine Werkzeugaufnahme (120) für Werkzeughalter (118, 134) aufweist, einer Werkzeugwechselvorrichtung (113) zum Überführen der Werkzeughalter (118, 134) zwischen deren jeweiliger Magazinposition und einer Arbeitsposition in der Werkzeugaufnahme (120), und einer Innenkühlung (121), die durch einen längs durch die Spindel (112) verlaufenden Innenkanal (126) einem in die Werkzeugaufnahme (120) eingespannten Werkzeughalter (118, 134) Kühlmittel zuführt, um ein im Einsatz befindliches Werkzeug (119) zu durchspülen,
**dadurch gekennzeichnet, daß** die Innenkühlung (121) während des Überführens eines Werkzeughalters (118, 134) in die Arbeitsposition eingeschaltet wird, um durch den Innenkanal (126) hindurch die Werkzeugaufnahme (120) und/oder den Werkzeughalter (118, 134) mit Kühlmittel abzuspülen, wobei Spülstrahlen (51) tangential zu dem Werkzeughalter (118, 134) verlaufen.

21. Verfahren nach Anspruch 20, **dadurch gekennzeichnet, daß** durch einen von dem Innenkanal (126) abzweigenden Spülkanal (162) ein Werkzeughalter (118, 134) beim Überführen in seine Arbeitsposition abgespült wird.

## Claims

1. Machine tool comprising a spindle (12, 112) having a tool receptacle (21, 120) for tool holders (18, 118, 134), a tool changing apparatus (13, 113) for transferring the tool holders (18, 118, 134) between their respective magazine position and a working position in said tool receptacle (21, 120), and an internal cooling system (23, 121) supplying through an internal duct (28, 126) running longitudinally through said spindle (12, 112) coolant from a coolant supply (24, 25, 122, 123) to a tool holder (18, 118, 134) clamped into said tool receptacle (21, 120), in order to flush out a tool (19, 119) that is in use, whereby a flushing apparatus is provided for flushing the tool holder (18, 118, 134) while being inserted into said tool receptacle (21, 120), **characterized in that** said flushing apparatus flushes the tool holder (21, 120) with coolant from said coolant supply (24, 25, 122, 123) and that said flushing apparatus (32) comprises nozzles (38, 41, 49) acting tangentially to the tool holder (18), said nozzles flushing in controlled fashion the tool holder (18) on its annular surface (46), preferably predominantly in parallel fashion.

2. The machine tool of claim 1, **characterized in that** a switchover apparatus (31) is provided that switches selectively the coolant supply (24, 25) from the internal coolant system (23) to the flushing apparatus (32).

3. The machine tool of claim 1 or claim 2, **characterized in that** the nozzles (41) are arranged on the tool changing apparatus (13).

4. The machine tool of anyone of claims 1 to 3, **characterized in that** the nozzles (38, 39) are arranged on the spindle housing (11) in the region of its end surface (39).

5. The machine tool of claim 4, **characterized in that** the nozzles (38, 49) are arranged on the end surface (39).

6. The machine tool of anyone of claims 1 to 5, **characterized in that** the nozzles are configured on pilot pins (43) for gripper hands (17).

7. The machine tool of claim 6, **characterized in that** the pilot pins (43) each have an axially extending delivery bore (48) and a predominantly tangentially or transversely oriented nozzle bore (49).

8. The machine tool of anyone of claims 1 to 7, **characterized in that** the nozzles (38, 41, 49) are interconnected with each other via an annular conduit (34).

9. The machine tool of claim 1, **characterized in that** at least one flushing conduct (152) branches off from the internal duct (126), the flushing duct having at least one outlet opening (163) arranged in the region of the tool receptacle (120).

10. The machine tool of claim 9, **characterized in that** the flushing duct (162) extends in the spindle (112).

11. The machine tool of claim 10, **characterized in that** the outlet opening (163) is located in an end face (146) of the spindle (112).

12. The machine tool of claim 11, **characterized in that** the tool receptacle (120) is designed for tool holder (134) with a hollow-shaft taper (HSK), a contact surface (147) being provided on the end face (146), the contact surface (147) being in planar contact with an annular surface (139) of a HSK-tool holder (134) when clamped into the tool receptacle (120), whereby said HSK-tool holder (134) is positioned accurately, and that the outlet opening (163) is located in the contact surface (147).

13. The machine of anyone of claims 9 to 12, **characterized in that** in the spindle (112), for automatic clamping-in of tool-holders (118, 134), a clamping apparatus (149) is provided which comprises a clamping bar (151) that is arranged in longitudinally displaceable fashion, coaxially with the spindle (112) in an internal bore (150), through which clamping bar the internal duct (126) passes in the longitudinal direction, and which comes into engagement with a coolant tube (141) of a tool holder (118, 134) when the latter is clamped in, so that the latter is supplied with coolant through the internal duct (126).

14. The machine tool of claim 13, **characterized in that** there is provided in the clamping bar (151) at least one transverse bore (162) which opens into the internal duct (126) and co-acts with a transfer space, provided in the spindle (112) and open towards the internal bore (150), into which the flushing conduct (162) opens.

15. The machine tool of claim 14, **characterized in that** the transfer space is an annular space (159) which surrounds the clamping bar (151).

16. The machine tool of claim 15, **characterized in that** above and below of the annular space (159), there are provided in the internal bore (150) seals (156, 157) sitting between the clamping bar (151) and the spindle (112).

17. The machine tool of claim 16, **characterized in that** the distance (158) between the two seals (156, 157) in the longitudinal direction of the clamping bar (151) is greater than a linear stroke to be effected by the clamping bar (151) when clamping in a tool holder (118, 134).

18. The machine tool of claim 14, **characterized in that** the clamping bar (151) is surrounded by an axially non-displaceable shaped sleeve (171) in which a transverse bore (172) is provided, that is connected to the flushing duct (172) and with which the transverse bore (162) in the clamping bar (151) communicates as a function of the latter's actual position.

19. The machine tool of anyone of claims 1 to 18, **characterized in that** a non-return valve (173) is arranged in the internal duct (28, 126).

20. A method for operating a machine tool (110) having a spindle (112) which has a tool receptacle (120) for tool holders (118, 134), a tool changing apparatus (113) for transferring the tool holders (118, 134) between their respective magazine position and a working position in the tool receptacle (120), and an internal cooling system (121) which delivers coolant through an internal duct (126) running longitudinally through the spindle (112) to a tool holder (118, 134) clamped into the tool receptacle (120), in order to flush out a tool (119) that is in use,
**characterized in that**
the internal cooling system (121) is activated during transfer of a tool holder (118, 134) into the working position, so as to flush the tool receptacle (120) and/or the tool holder (118, 134) through said internal duct (126) with coolant, whereby flushing jets (21) are running tangentially to the tool holder (118, 134).

21. The method of claim 20, **characterized in that** a tool holder (118, 134) is flushed, while being transferred, into its working position, by means of a flushing duct (162) branching off from the internal duct (126).

## Revendications

1. Machine-outil avec une broche (12, 112) qui comporte un logement d'outil (21, 120) pour des porte-outils (18, 118, 134), avec un dispositif d'échange d'outil (13, 113) pour transférer les porte-outils (18, 118, 134) entre leur position de magasin respective et une position de travail dans le logement d'outil (21, 120), et un refroidissement interne (23, 121) qui amène un réfrigérant, à travers un canal intérieur (28, 128) s'étendant longitudinalement à travers la broche (12, 112), à un porte-outil (18, 118, 134) serré dans le logement d'outil (21, 120), depuis une alimentation en réfrigérant (24, 25, 122, 123), afin de laver un outil (19, 129) en cours d'utilisation, un dispositif de lavage étant prévu pour laver le porte-outil (18, 118, 134) pendant son échange dans le logement d'outil (21, 120), **caractérisée en ce que** le dispositif de lavage lave le porte-outil (21, 120) avec un réfrigérant provenant de l'alimentation en réfrigérant (24, 25, 122, 123), et **en ce que** le dispositif de lavage (32) comprend des buses (38, 41, 49), agissant tangentiellement par rapport au porte-outil (18), lesquelles lavent, de manière ciblée, la surface annulaire (46) du porte-outil (18), de préférence principalement parallèlement.

2. Machine-outil selon la revendication 1, **caractérisée en ce qu'**il est prévu un dispositif de commutation (31) qui commute l'alimentation en réfrigérant (24, 25), au choix, du refroidissement interne (23) au dispositif de lavage (32).

3. Machine-outil selon la revendication 1 ou 2, **caractérisée en ce que** les buses (41) sont disposées sur le dispositif d'échange d'outil (13).

4. Machine-outil selon l'une des revendications 1 à 3, **caractérisée en ce que** les buses (38, 49) sont disposées sur le boîtier de broche (11) dans la zone de sa face frontale (39).

5. Machine-outil selon la revendication 4, **caractérisée en ce que** les buses (38, 49) sont disposées sur la face frontale (39).

6. Machine-outil selon l'une des revendications 1 à 5, **caractérisée en ce que** les buses sont réalisées sur des pilotes (43) des mains de préhension (17).

7. Machine-outil selon la revendication 6, **caractérisée en ce que** les pilotes (43) comportent chacun un perçage d'amenée (48) s'étendant axialement et un perçage de buse (49) orienté pour l'essentiel tangentiellement ou transversalement.

8. Machine-outil selon l'une des revendications 1 à 7, **caractérisée en ce que** les buses (38, 41, 49) sont reliées entre elles par une conduite annulaire (34).

9. Machine-outil selon la revendication 1, **caractérisée en ce que** du canal intérieur (126) part au moins un canal de lavage (152) dont au moins un ouverture de sortie (163) est disposée dans la zone du logement d'outil (120).

10. Machine-outil selon la revendication 9, **caractérisée en ce que** le canal de lavage (162) s'étend dans la broche (112).

11. Machine-outil selon la revendication 10, **caractérisée en ce que** l'ouverture de sortie (163) se situe dans une face frontale (146) de la broche (112).

12. Machine-outil selon la revendication 11, **caractérisée en ce que** le logement d'outil (120) est conçu pour des porte-outils (134) avec cône à tige creuse (HSK), sur la face frontale (146) étant prévue une surface de contact (147) qui, lorsque le porte-outil HSK (134) est serré dans le logement d'outil (120), est en contact plan avec sa surface annulaire (139), ce qui fait que le porte-outil HSK (134) est positionné de manière précise, et **en ce que** l'ouverture de sortie (163) se situe dans la surface de contact (147).

13. Machine-outil selon l'une des revendications 9 à 12, **caractérisée en ce que** dans la broche (112) est prévu, pour le serrage automatique de porte-outils (118, 134), un dispositif de serrage (149) qui comprend une tige de serrage (151) qui est disposée de manière à pouvoir coulisser longitudinalement dans un perçage intérieur (150), coaxialement à la broche (112), laquelle tige de serrage est traversée par le canal intérieur (126) dans la direction longitudinale et parvient en engagement avec un petit tube de réfrigérant (141) d'un porte-outil (118, 134) lors de son serrage, ce qui fait que celui-ci est alimenté en réfrigérant à travers le canal intérieur (126).

14. Machine-outil selon la revendication 13, **caractérisée en ce que** dans la tige de serrage (151) est prévu au moins un perçage transversal (162) débouchant dans le canal intérieur (126), perçage qui coopère avec une chambre de transfert prévue dans la broche (112), ouverte vers le perçage intérieur (150), dans laquelle débouche le canal de lavage (162).

15. Machine-outil selon la revendication 14, **caractérisée en ce que** la chambre de transfert est une chambre annulaire (159) qui s'étend autour de la tige de serrage (151).

16. Machine-outil selon la revendication 15, **caractérisée en ce qu'**au-dessus et au-dessous de l'espace annulaire (159) sont prévues, dans le perçage intérieur (150), des garnitures d'étanchéité (156, 157) qui se trouvent entre la tige de serrage (151) et la broche (112).

17. Machine-outil selon la revendication 16, **caractérisée en ce que** la distance (158) entre les deux garnitures d'étanchéité (156, 157), dans la direction longitudinale de la tige de serrage (151), est supérieure à la course que doit exécuter la tige de serrage (151) lors du serrage d'un porte-outil (118, 134).

18. Machine-outil selon la revendication 14, **caractérisée en ce que** la tige de serrage (151) est entourée par une douille façonnée (171) qui ne peut coulisser axialement, dans laquelle est prévu un perçage transversal (172) relié au canal de lavage (162), avec lequel le perçage transversal (162) de la tige de serrage (151) communique, suivant sa position axiale.

19. Machine-outil selon l'une des revendications 1 à 18, **caractérisée en ce que** dans le canal intérieur (28, 126) est disposé un clapet de non-retour (173).

20. Procédé pour faire fonctionner une machine-outil (110) avec une broche (112) qui comporte un logement d'outil (120) pour des porte-outils (118, 134), avec un dispositif d'échange d'outil (113) pour transférer les porte-outils (118, 134) entre leur position de magasin respective et une position de travail dans le logement d'outil (120), et un refroidissement interne (121) qui amène un réfrigérant, à travers un canal intérieur (126) s'étendant longitudinalement à travers la broche (112), à un porte-outil (118, 134) serré dans le logement d'outil (120), afin de laver un outil (129) en cours d'utilisation,
**caractérisé en ce que** le refroidissement interne (121) est mis en marche pendant le transfert d'un porte-outil (118, 134) dans la position de travail, afin de laver avec le réfrigérant le logement d'outil (120) et/ou le porte-outil (118, 134), à travers le canal intérieur (126), des jets de lavage (51) s'étendant tangentiellement au porte-outil (118, 134).

21. Procédé selon la revendication 20, **caractérisé en ce qu'**un porte-outil (118, 134) est lavé pendant le transfert dans sa position de travail, à travers un canal de lavage (162) partant du canal intérieur (126).
